# EUROPÄISCHE PATENTSCHRIFT

(11) **EP 1 382 548 B1**
(45) Veröffentlichungstag und Bekanntmachung des Hinweises auf die Patenterteilung: **11.10.2006**
(21) Anmeldenummer: 03012824.3
(22) Anmeldetag: 05.06.2003
(51) Int. Cl.: B65D 88/12, B60P 3/22, B65D 88/74

(54) **Bodenrahmenstruktur für einen Tankcontainer**
Base frame structure for a tank container
Structure de cadre de base pour un conteneur citerne

(30) Priorität: 15.07.2002 DE 20211594 U
(43) Veröffentlichungstag der Anmeldung: 21.01.2004
(73) Patentinhaber: WEW Westerwälder Eisenwerk GmbH, 57586 Weitefeld (DE)
(72) Erfinder: Pfau, Dieter, 57578 Elkenroth (DE); Bernhardt, Ulrich, Dr., 31542 Bad Nenndorf (DE)
(74) Vertreter: Lippich, Wolfgang

(56) Entgegenhaltungen:
- EP-A- 0 733 511
- DE-A- 4 100 010
- US-A- 1 848 191

## Beschreibung

Beim Transport, der Lagerung und dem Umschlag von Tankcontainern treten unterschiedlichste Betriebslasten auf. Tankcontainer bestehen aus einem Rahmenwerk und einem Behäl - ter, die so gestaltet und gekoppelt sind, daß sie diesen Betriebslasten dauerhaft standhalten. Dabei werden äußere Lasten, die an den Containereckbeschlägen angreifen vom Rahmenwerk und vom Behälter selbst aufgenommen. Die Lastübertragung zwischen dem Rahmen und dem Behälter erfolgt meist über eine Ringsattelung, wie sie z.B. aus DE 32 12 696 C2 bekannt ist. Solche Sattelungen sind besonders robust und gewichtssparend ausführbar, wenn die Betriebslasten ausschließlich an den Stirnrahmen, insbesondere in den Eckbeschlägen angreifen.

Es gibt jedoch auch Lastfälle, bei denen Kräfte im Bereich zwischen den Stirnseiten angreifen. Dabei handelt es sich vornehmlich um von unten wirkende Vertikalkräfte, die beim Transport auf Straßenfahrzeugen auftreten. Ein Lastfall bei Tankcontainern besteht darin, daß sich dieser in sogenannten "Intermediate Load Transfer Areas" auf den Hauptträgern des Fahrzeugs abstützt.

Ein anderer Lastfall betrifft den Einsatz von Tankcontainern als Abrollbehälter, bei dem beim Auf- und Abladen des Tankcontainers über ein Hakenliftsystem der Container über als Abrollprofile ausgebildete Längsträger abrollt, und dabei auf diese Profile eine weitgehend vertikale, aufwärts wirkende, wandernde Punktlast ausgeübt wird.

Für diese Lastfälle ist eine herkömmliche Stirnsattelung allein unzureichend. Die bekannten Lösungsansätze bestehen darin, extrem starre und steife Bodenrahmenkonstruktionen auszuführen, die diese Kräfte ohne Nutzung der Tragfähigkeit des Behälters aufnehmen, oder darin, den Tank im Sohlenbereich über geeignete metallische Sattelelemente mit im Sohlenbereich verlaufenden Profilen so zu koppeln, daß sich diese am Tank abstützen und der Tank selbst einen Teil der Lasten mit aufnimmt.

Aus der EP 0 733 511 A2 ist eine Kippmulde mit bogenförmigem Querschnitt bekannt, die im Bodenbereich mit einer der Muldenkontur folgenden Verstärkungsschale versehen ist, welche zwischen zwei Längsgestellteilen verläuft, die auf den -Längsträgern eines Fahrzeugs aufliegen. Dabei dient die Verstärkungsschale als Aufprallschutz für in der Mulde zu befördernde Bruchsteine.

Aus USP 1,848,191 ist ein Fahrzeugaufbau für einen zylindrischen Tank bekannt, bei dem der vollständig isolierte Tank großflächig von zwei axial verlaufenden, gekrümmten Schalenelementen aufgenommen wird, welche der Tankaußenkontur folgen und über an die Tankkontur angepaßte Querrippen miteinander verbunden sind.

Bei isolierten Tankcontainern haben die bekannten Lösungsansätze besonders gravierende Nachteile. So wird das ohnehin schon um die Isolierschichtdichte verringerte nutzbare Volumen des Behälters durch steife und damit hohe Bodenprofile zusätzlich eingeschränkt, wenn die Bodenprofile vollständig außerhalb der Isolierung verlaufen sollen. Sind die Bodenprofile mit dem Tank selbst verbunden, so muß in den Verbindungsbereichen die Isolierung unterbrochen werden. Dadurch entstehen zusätzlich Wärmebrücken. Dies beeinträchtigt die Isolierwirkung stark und erhöht den Fertigungsaufwand und das Taragewicht erheblich.

Die Aufgabe der vorliegenden Erfindung besteht darin, einen Tankcontainer mit einer leichten und fertigungsfreundlichen Bodenrahmenbaugruppe darzustellen, die entsprechende Betriebslasten aufnehmen kann, ohne daß die Isolierwirkung und das Volumen des Tanks beeinträchtigt wird.

Die erfindungsgemäße Lösung dieser Aufgabe ist, aüsgehend von der EP 0 733 511 A2, im Anspruch 1 angegeben. Durch die starre Verbindung von Längsträgern und einem Schalenelement entsteht ein stabilisiertes Bodenrahmenbauteil, das trotz flacher Bauweise eine wesentlich erhöhte Biegesteifigkeit gegen Vertikallasten aufweist. Besonders stabil wird diese Baugruppe in einstückiger oder verschweißter Ausführung gemäß Anspruch 2.

Die Ausführungen nach Anspruch 3 und 4 betreffen die Nutzung der Längsträger als Abrollprofile bei Tankcontainern die als Abrollbehälter ausgebildet sind.

Die Weiterbildungen gemäß Anspruch 5 bis 9 betreffen isolierte Tankcontainer, bei denen das Schalenelement gleichzeitig als Isolierabdeckung dient (Anspruch 7 und 8) und bei denen, bei entsprechender Gestaltung eines lastübertragenden Bereichs der Isolierlage aus einem geeignetem Isolierstoff der Tank selbst Vertikallasten aufnehmen kann (Anspruch 8 und 9).

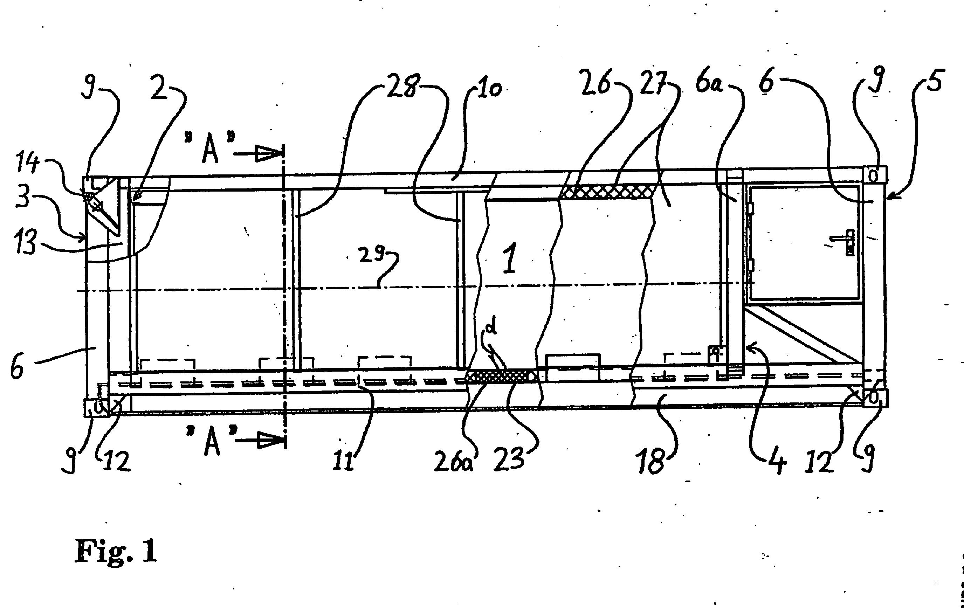

Ein bevorzugtes Ausführungsbeispiel der Erfindung wird nachstehend anhand der Zeichnungen näher erläutert. Darin zeigen
Figur 1 eine Seitenansicht des Tankcontainers mit Teilausschnitten,
Figur 2 eine Darstellung des Schnitts "A"-"A" in Figur 1, in der Fahrzeugteile und einige Rahmenelemente strichpunktiert dargestellt sind.
Figur 3 eine Teildarstellung des Schnitts "A"-"A" in Figur 1 mit einer alternativen Schalenelementausführung ohne Rahmenelemente und Fahrzeugteile.

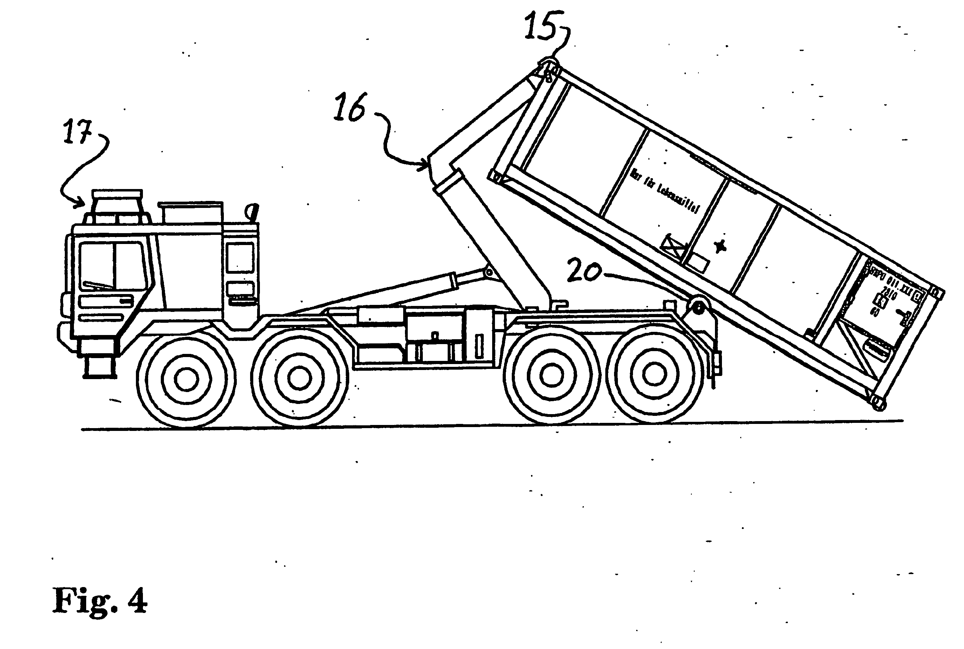

Figur 4 eine schematische Darstellung die den Be- bzw. Entladevorgang des Tankcontainers mit einem entsprechenden Fahrzeug zeigt.

Der Tankcontainer umfaßt einen kofferförmigen Tank **1**, der über Stirnsättel **2** mit zwei Stirnrahmen **3, 4** verbunden ist. Der Zwischenstirnrahmen **4** und ein weiterer Endstirnrahmen **5** definieren einen Bereich, der zur Aufnahme von Aggregaten wie Pumpen, Wasseraufbereitungsanlagen, Energieversorgungen, Ersatzteilen usw. geeignet ist. Der Tank **1** ist kürzer als der gesamte Tankcontainer. Alle Stirnrahmen **3, 4, 5** umfassen Eckstücken **6** bzw. äußere Vertikalstreben **6a** und Querholme **7**, wobei die den Tank **1** tragenden Stirnrahmen **3, 4** zusätzlich Diagonalstreben **8** aufweisen, die mit den Stirnsätteln **2** verschweißt sind. Die äußeren Stirnrahmen **3, 5** enthalten zusätzlich jeweils vier Eckbeschläge **9** die den Transport und den Umschlag des Tankcontainers, ermöglichen. Zwei obere Längsholme **10** verbinden die oberen Eckbeschläge **9**, und zwei untere Längsholme **11** verlaufen zwischen den Eckstützen **6** der Stirnrahmen **3, 5** unmittelbar über den Eckbeschlägen **9**, mit denen sie über Knotenelemente **12** zur besseren Krafteinleitung verbunden sind.

Der bezogen auf die Fahrtrichtung vordere Stirnrahmen **3** umfaßt zwei innere Vertikalstreben **13**, ebenfalls mit dem Stirnsattel **2** verschweißt sind und zwischen denen ein Bügel **14** befestigt ist, der von einem zu einem Hakenlift **16** gehörigen Haken **15** aufgenommen wird, das auf einem Fahrzeug **17** vorgesehen ist.

Weiterhin umfaßt der Container zwei weitere im Bodenbereich verlaufende Längsträger **18**, die parallel zueinander und zur Tankachse **29** zwischen den Stirnrahmen **3, 5** verlaufen. Der Abstand der Längsträger **18** zueinander und deren Profil sind so gewählt, daß sie mit einem Hakenliftsystem kompatibel sind. Im Ausführungsbeispiel sind die entsprechenden Abmessungen so gewählt, daß sie zu einem Hakenliftsystem nach DIN 30722 passen. Im Transportzustand liegen die beiden Längsträger **18** auf entsprechenden Chassisträgern **19** des Fahrzeugs **17** auf.

Beim Entladen des Containers vom Fahrzeug **17** hebt der Haken **15** den Container über den Bügel **14** an und schiebt ihn mittels des Hakenlifts **16** über Transportrollen **20** über das Fahrzeugheck hinaus, bis der hintere Stirnrahmen **5** den Boden berührt. Das Fahrzeug **17** fährt unter dem am Haken **15** hängenden Container heraus, bis der vordere Stirnrahmen **3** sich hinter dem Fahrzeugheck befindet und dort vom Hakenlift ebenfalls auf dem Boden abgesetzt wird. Beim Abrollen des Containers bewegen sich die Längsträger **18** auf den Transportrollen **20,** die eine von der Lage des Containers auf dem Fahrzeug **17** abhängige Vertikalkraftkomponente auf die Längsträger **18** aufbringen. Zur Führung der Längsträger **18** sind die Transportrollen **20** doppelkonisch ausgeführt.

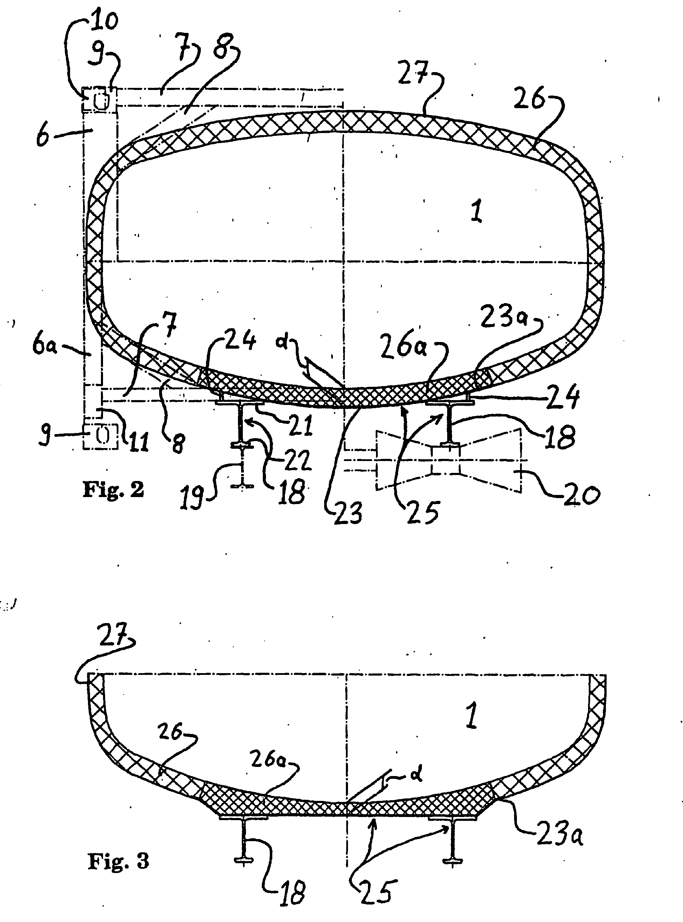

Die Längsträger **18** sind beim Be- und Abladevorgang auf Biegung beansprucht. Dabei wird der Obergurt **21** des Längsträgers **18** mit einer Zug- und der Untergurt **22** mit einer Druckspannung beansprucht. Der dargestellte Längsträger **18** weist ein doppel-T-ähnliches Profil auf; andere geeignete Profile zur Aufnahme solcher Lasten sind nicht dargestellte T-, C-, U- oder Rechteckrohrprofile. Zwischen den Längsträgern **18** ist im Bereich des Tanks **1** ein Schalenelement **23** angeordnet, das an den zugewandten Enden der Obergurte **21** und über zwei ebenfalls mit dem Obergurt **21** verbundenen Stützleisten **24** mit den Längsträgern **18** verschweißt ist. Damit bilden Längsträger **18**, Stützleisten **24** und Schalenelemente **23** eine stabile, flache und biegesteife Bodenrahmenbaugruppe **25**, die besonders für die beim Be- und Endladevorgang auftretenden Biegebeanspruchungen geeignet ist. Dabei kann das Schalenelement **23** neben der in Figur 2 dargestellten konzentrisch zur Tankwölbung verlaufenden Zylinderschalenform auch prismatisch gekantet sein, wobei die Kantungen parallel zur Tankachse **29** verlaufen (Fig. 3). In einer nicht dargestellten Ausführung sind Schalenelement **23** und Längsträger **18** einstückig aus einer Blechabwicklung hergestellt.

Der Tank **1** ist über die Stirnsättel **2** mit den Stirnrahmen **3, 4** verbunden, und ist in einem Abstand d über dem Schalenelement **23** angeordnet. Der Abstand d ist so gewählt, daß die Durchbiegung der Bodenrahmenbaugruppe **25** beim Be- und Entladen kleiner ist als der Abstand d. So wird verhindert, daß der Tank **1** beim Be- und Entladen Belastungen erfährt, für die er nicht geeignet ist. Der Tank **1** selbst kann so mit geringst möglicher Wandstärke ausgeführt werden, die nur durch die entsprechende Innendruckbelastung oder andere Faktoren bestimmt ist, die nichts mit der Vertikalbeanspruchung beim Einsatz der Tankcontainer zu tun haben.

Der Tankcontainer ist isoliert ausgeführt. Dabei ist zwischen Schalenelement **23** und Tank **1** eine Isolierung **26, 26a** angebracht die den Behälter vollständig umschließt. Die Isolierung ist von einer Isolierabdeckung **27** umgeben, die am Schalenelement **23** über Flankenstücke **23a** befestigt ist und zusätzlich mittels Spannbändern **28** gegen Behälter gedrückt wird. Die Flankenstücke **23a** gehen tangential in die Isolierabdeckung **27** über. Die Isolierung **26, 26a** selbst, kann aus beliebigen geeigneten Isolierwerkstoffen bestehen wie Mineralwolle, PUR-Schaum usw.

Der Isolierungsbereich **26a,** der sich genau zwischen dem Schalenelement **23** und dem Tank **1** befindet, besteht aus einem druckfesten Isolierwerkstoff, der beim Transport, bei der Lagerung und insbesondere beim Auf- und Abladen des Containers auftretende Lasten, die von der Bodenrahmenbaugruppe **25** aufgenommen werden, verteilt auf den Tank überträgt. Durch diese Lastverteilung kann der Tank **1** zusätzlich als stützendes Element genutzt werden, ohne daß er plastische Verformungen erfährt. Für den Isolierungsbereich **26a** sind insbesondere PUR/PIR-Werkstoffe geeignet, die eine Druckfestigkeit von mindestens 0,2 N/mm² aufweisen, aber auch andere Werkstoffe, wie Holz, Kork, oder Kunststoffmaterialien sind geeignet.

Neben dem dargestellten kofferförmigen Querschnitt kann der Tank **1** auch einen ovalen, zylindrischen oder anderen geeigneten Querschnitt aufweisen. Der Tank kann sich auch ohne den Zwischenstirnrahmen **4** zwischen den äußeren Stirnrahmen **3**, **5** erstrecken, wenn der für Zusatzaggregate vorgesehene Montagebereich nicht erforderlich sein sollte. Die Erfindung ist ebenfalls für Tankcontainer vorteilhaft, die nicht über ein Abrollsystem umgeschlagen werden sollen, sondern bei denen die Bodenrahmenbaugruppe **25** in genormten Lastübertragungszonen ("Intermediate Load Transfer Areas" nach ISO 1496-3) Vertikallasten aufnehmen können.

## Patentansprüche

1. Tankcontainer mit einem Tank (1) und einem den Tank (1) über Stirnrahmen (3, 4, 5) aufnehmenden Rahmenwerk, wobei das Rahmenwerk untere Längsträger (18) umfaßt, und ein Schalenelement (23) aufweist, das die unteren Längsträger (18) starr miteinander verbindet,
**dadurch gekennzeichnet, daß**
das Schalenelement (23) prismatisch gekantet ist, wobei die Kantungen parallel zur Tankachse (29) verlaufen, und zwischen den Längsträgern (18) ein ebenes Flächenelement verläuft.

2. Tankcontainer nach Anspruch 1, wobei Längsträger (18) und Schalenelement (23) einstückig ausgebildet oder miteinander verschweißt sind.

3. Tankcontainer nach einem der vorhergehenden Ansprüche, wobei die Längsträger (18) als Abrollprofile ausgeführt sind.

4. Tankcontainer nach einem der vorhergehenden Ansprüche, wobei die Längsträger (18) ein U-, C-, T-, Doppel-T- oder Rechteckrohr-Profil aufweisen.

5. Tankcontainer nach einem der vorhergehenden Ansprüche, wobei der Tankcontainer eine Isolierung (26, 26a) und eine Isolierabdeckung (27) aufweist und das Schalenelement (23) ein Element der Isolierabdeckung (27) bildet.

6. Tankcontainer nach Anspruch 5, wobei das Schalenelement (23) Flankenstücke (23a) aufweist, die tangential in die Isolierabdeckung (27) übergehen.

7. Tankcontainer nach Anspruch 5 oder 6, wobei die Isolierabdeckung (27) am Schalenelement (23, 23a) befestigt ist.

8. Tankcontainer nach einem der Ansprüche 5 bis 7, wobei ein zwischen Tank (1) und Schalenelement (23) verlaufender Isolierungsbereich (26a) so ausgebildet ist, daß er Vertikalkräfte zwischen Schalenelement und Tank ohne plastische Verformung des Tanks überträgt.

9. Tankcontainer nach Anspruch 8, wobei der Isolierungsbereich (26a) aus einem geeigneten druckfesten Isolierstoff, vorzugsweise aus PUR/PIR, noch bevorzugter aus PUR/PIR mit einer Druckfestigkeit von mindestens 0,2 N/mm² besteht.

## Claims

1. Tank container with a tank (1) and a framework picking up the tank (1) over front frames (3, 4, 5) whereby the framework is equipped with lower longitudinal beams (18) and comprises a shell element (23) which rigidly connects the lower longitudinal beams (18),
**characterised in that**
the shell element (23) is bent in a prismatic way, wherein the bending edges run parallel to the tank axis (29), and a planar surface element runs between the longitudinal beams (18).

2. Tank container according to claim 1, wherein the longitudinal beams (18) and the shell element (23) are in one piece or welded together.

3. Tank container according to one of the preceding claims, wherein the longitudinal beams (18) are styled as roll-off profiles.

4. Tank container according to one of the preceding claims, wherein the longitudinal beams (18) are shaped in a U-, C-, T-, double T- or rectangular tube profile.

5. Tank container according to one of the preceding claims, wherein the tank container is equipped with an insulation (26, 26a) and an insulating cover (27), and the shell element (23) is part of the insulation cover (27).

6. Tank container according to claim 5, wherein the shell element (23) is equipped with flank pieces (23a) entering the insulation cover (27) in a tangential way.

7. Tank container according to claim 5 or 6, wherein the insulating cover (27) is attached to the shell element (23, 23a).

8. Tank container according to one of claims 5 to 7, wherein an insulation area (26a) running between the tank (1) and the shell element (23) is laid out in a way that vertical forces between the shell element and the tank are transmitted without plastic deformation of the tank.

9. Tank container according to claim 8, wherein the insulation area (26a) is made of an appropriate compression proof insulating material, preferably PUR/PIR, with a compressive resistance of at least 0.2 N/mm².

## Revendications

1. Conteneur citerne avec une citerne (1) et un châssis recevant la citerne (1) par l'intermédiaire de châssis frontaux (3, 4, 5), le châssis comprenant des longerons inférieurs (18) et présentant un élément formant coque (23) reliant rigidement ensemble les longerons inférieurs (18), **caractérisé en ce que** l'élément formant coque (23) est de forme polygonale prismatique, les arêtes s'étendant parallèlement à l'axe de citerne (29), et un élément de surface plan s'étend entre les longerons (18).

2. Conteneur citerne selon la revendication 1, des longerons (18) et un élément formant coque (23) étant réalisés d'une seule pièce ou bien étant soudés ensemble.

3. Conteneur citer selon l'une des revendications précédentes, les longerons (18) étant réalisés sous la forme de profil à déroulement.

4. Conteneur citerne selon l'une des revendications précédentes, les longerons (18) présentant un profil en U, en C, en T, en double T ou rectangulaire.

5. Conteneur citerne selon l'une des revendications précédentes, le conteneur citerne présentant une isolation (26, 26a) et un recouvrement isolant (27), et l'élément formant coque (23) formant un élément du recouvrement isolant (27).

6. Conteneur citerne selon la revendication 5, l'élément formant coque (23) présentant des éléments de flancs (23a) se transformant tangentiellement en le recouvrement isolant (27).

7. Conteneur citerne selon la revendication 5 ou 6, le recouvrement isolant (27) étant fixé sur l'élément formant coque (23, 23a).

8. Conteneur citerne selon l'une des revendications 5 à 7, une zone d'isolation (26a) s'étendant entre la citerne (1) et l'élément formant coque (23) étant réalisée de manière qu'elle transmette les efforts verticaux entre l'élément formant coque et la citerne, sans que la citerne subisse de déformation plastique.

9. Conteneur citerne selon la revendication 8, la zone d'isolation (26a) étant composée d'un matériau isolant résistant à la pression, approprié, de préférence en PUR/PIR, de façon encore mieux préférée en PUR/PIR ayant une résistance à la compression d'au moins 0,2 N/mm².
